Europäisches Patentamt

European Patent Office

Office européen des brevets

(11) Publication number: **0 187 011**
A1

(12) **EUROPEAN PATENT APPLICATION**

(21) Application number: 85309148.6

(22) Date of filing: 16.12.85

(51) Int. Cl.⁴: **B 66 F 9/075**, B 62 D 21/16

(30) Priority: 29.12.84 GB 8432762

(43) Date of publication of application: 09.07.86 Bulletin 86/28

(84) Designated Contracting States: AT BE CH DE FR GB IT LI NL

(71) Applicant: Coventry Climax Limited, Sandy Lane, Coventry CV1 4DX (GB)

(72) Inventor: Grey, Steven, Coventry Climax Limited Sandy Lane, Coventry CV1 4DX (GB)

(74) Representative: Cowan, David Robert et al, WALFORD AND HARDMAN BROWN Trinity House Hales Street, Coventry CV1 1NP West Midlands (GB)

(54) Vehicle chassis.

(57) A chassis for a fork lift truck has two sealed chambers at the sides of the chassis for fuel and/or hydraulic fluid.

The chambers are defined by spaced parallel rolled tubular members 10, 11 or rectangular section.

The members 10, 11 are formed from lengths of rolled tube cut at an acute angle so that individual lengths have opposite ends lying in planes of equal and opposite inclination. The rolled tube is formed with a single weld extending longitudinally along a side wall.

The tubular members 10, 11 are interconnected by cross members 23, 26 to define a rigid structure and the ends of the tubular members are sealed by plates 20.

## Vehicle Chassis

This invention relates to a vehicle chassis and, in particular, a vehicle chassis suitable for fork lift trucks.

Fork lift trucks conventionally include a rigid chassis supported on three or four wheels and having a lifting mast at one end and counterbalance weights at the other end. The chassis is usually of fabricated construction and incorporates a tank or tanks for fuel and hydraulic fluid. Such a chassis is described in US-A-2764449.

It is an object of the invention to provide an improved, more cost-effective chassis construction for fork lift vehicles and a method of constructing the chassis.

According to one aspect of the invention a method of constructing a vehicle chassis for fork lift trucks, wherein chassis members are formed in which the members define sealed chambers, is characterised in that two rolled tubular members of rectangular cross-section are formed, end members are located at the ends of rolled tubular members to define sealed chambers within the members, the tubular members are located in spaced parallel relationship, and the tubular members are interconnected by cross members towards opposite ends of the tubular members to form a rigid chassis structure.

Conveniently the rolled tubular members are rolled to a rectangular section and are welded to define a single longitudinal seam and the seam is formed in a side wall of the member and is electrically welded.

Preferably one or both of said chambers acts as a tank for containing fuel and/or hydraulic fluid.

The rolled tubular members are preferably formed by cutting long lengths of rolled rectangular cross-section tube into individual lengths suited to the size of the chassis to be constructed and the lengths of rolled tube are cut at an acute angle relative to the longitudinal direction, the angle being equal and opposite at opposite ends of the individual lengths. The tubular members are usually of square cross-section.

At one end of the chassis the cross member is connected to the tubular members through at least one plate secured in face to face contact with an inner upright face of each tubular member, the plates being joined by the cross member. At the opposite end of the chassis the cross member is connected at each end directly to the inner upright face and the upper horizontal face of the tubular members.

According to another aspect of the invention a chassis for a fork lift truck,wherein the chassis includes sealed chambers, is characterised by a pair of spaced, parallel rolled tubular members of rectangular cross-section, end members at the ends of each tubular member to define sealed chambers within the tubular members, and cross members located towards opposite ends of the tubular members to interconnect the tubular members and define a rigid chassis structure.

Further features of the invention will become apparant from the following description of an embodiment of the invention given by way of example only and with reference to the drawings, in which:-

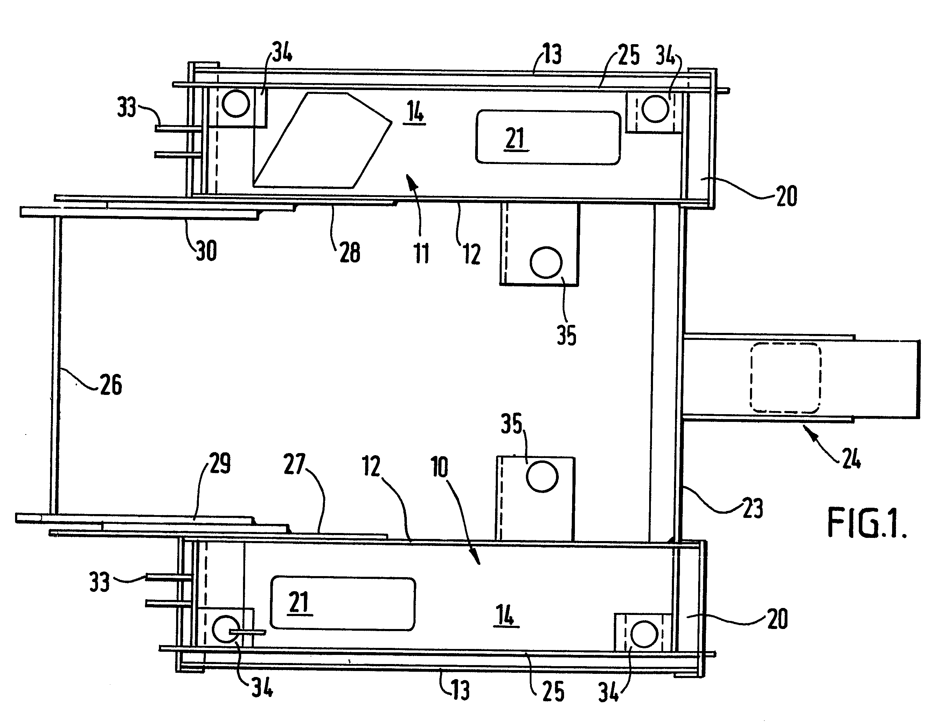

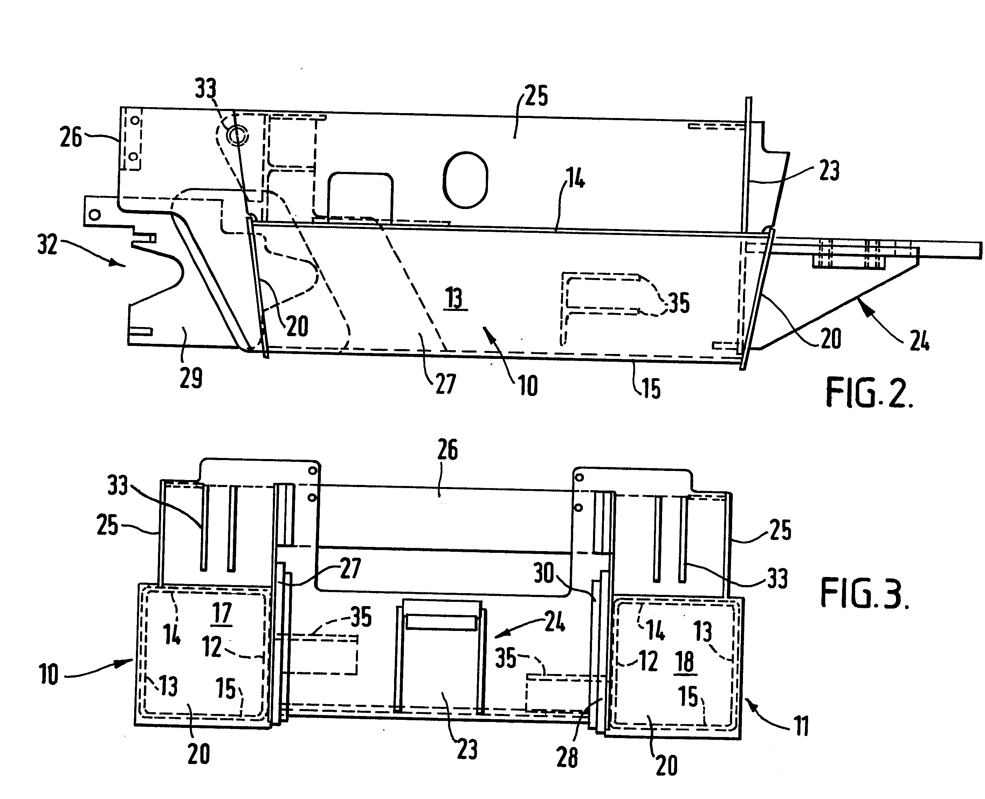

Fig. 1 is a plan view of a chassis for a fork lift truck, Fig. 2 is a side elevation, and Fig. 3 is an end view.

Referring to the drawings a chassis for a fork lift truck is shown. The chassis consists of two spaced, parallel, rolled steel, tubular members 10 and 11 which are each of square cross-section having upright inner and outer side walls 12 and 13 respectively and horizontal upper and lower side walls 14 and 15 respectively. The members 10 and 11 have a single seam (not shown) usually located in one of the side walls 12 or 13 and electrically welded so that the members each define a sealed chamber 17 and 18 one of which can serve as a fuel tank and the other a hydraulic fluid tank.

The members 10 and 11 are formed as long lengths which are cut into individual lengths suited to the size of the chassis to be constructed. The cut is made in a plane at an acute angle to the longitudinal axis so that opposite ends of the individual lengths are oppositely inclined, as shown. The cut individual lengths are arranged in the chassis so that the length of the lower sides 15 of the members 10 and 11 is less than that of the upper sides 14, as shown. The open ends of the members 10 and 11 are closed and sealed by end plates 20 which are welded over the ends and to the members.

Openings are made in the upper side walls 14 of the members 10 and 11 over which closure plates 21 are connected and access to the chambers 17 and 18 is made through the closure plates 21.

Towards the rear ends of the members 10 and 11 a cross member 23 in the form of a metal plate interconnects the members 10 and 11. The cross member 23 extends at right angles to the longitudinal

direction and is welded directly to and along the upper side of the upper side walls 14 and along the inner side of the inner side walls 12 so as to form a rigid connection. A bracket 24 is fixed mid way along the cross member 23 and the bracket 24 acts as a support for the vehicle counterweights (not shown) and also as a mounting for the vehicle rear axle (not shown). The cross member 23 also acts as a mounting member for the counterweights in the region above the members 10 and 11 and for location of a sub-frame assembly 25.

At the forward end of the chassis is a further cross member 26 which extends between forwardly-extending plates 27 and 28 and 29 and 30. The plates 27 and 28 are fixed by welding in face to face arrangement with the inner side walls 12 of the tubular members and the plates 27 and 28 extend beyond the leading ends of the members 10 and 11. The further plates 29 and 30 are secured to the plates 27 and 28 and extend forwardly for connection to the cross member 26. The plates 29 and 30 each also provide a mounting 32 for the vehicle front axle (not shown).

Secured to the upper side of the upper walls 14 of the members 10 and 11 are brackets 33 for securing hydraulic tilt cylinders (not shown) for the mast (not shown) of the truck.

The upper walls 14 of the members 10 and 11 are also fitted with support members 34 for mounting the vehicle cab (not shown).

Brackets 35 directed inwardly from the inner side walls 12 are for supporting the engine mountings of the vehicle.

It will be seen that the vehicle is built up on the chassis to provide the conventional front axle with the mast mounted on the axle, the rear axle, counterweights, motor, cab, etc.

The chassis construction described provides a structure which has the necessary rigidity and is highly cost effective in manufacture. The tubular members can be constructed in a rolling mill in long lengths without the need for conventional bending and fabrication methods for the equivalent components, as currently used. By a simple operation the long lengths are cut into the desired individual lengths 10 and 11, considerably simplifying and cheapening the construction employed. Surprising advantages have been found to arise out of the utilisation of such preformed rolled sections in the chassis construction.

CLAIMS

1. A method of constructing a vehicle chassis for fork lift trucks, wherein chassis members are formed in which the members define sealed chambers 17, 18, is characterised in that two rolled tubular members 10, 11 of rectangular cross-section are formed, end members 20 are located at the ends of rolled tubular members 10, 11 to define sealed chambers 17, 18 within the members, the tubular members 10, 11 are located in spaced parallel relationship, and the tubular members are interconnected by cross members 23, 26 towards opposite ends of the tubular members to form a rigid chassis structure.

2. A method according to claim 1 wherein the rolled tubular members 10, 11 are rolled to a rectangular section and are welded to define a single longitudinal seam.

3. A method according to claim 2 characterised in that the seam is formed in a side wall of the member and is electrically welded.

4. A method according to any one of the preceding claims characterised in that the rolled tubular members 10, 11 are formed by cutting long lengths of rolled rectangular cross-section tube into individual lengths 10, 11 suited to the size of the chassis to be constructed.

5. A method according to claim 4 characterised in that the lengths of rolled tube are cut at an acute angle relative to the longitudinal direction, the angle being equal and opposite at opposite ends of the individual lengths 10, 11.

6.  A method according to any one of the preceding claims, characterised in that at one end of the chassis a cross member 26 is connected to the tubular members 10, 11 through at least one plate 27, 28, 29, 30 secured in face to face contact with an inner upright face 12 of each tubular member, the plates being joined by the cross member 26.

7.  A method according to claim 6, characterised in that towards the opposite end of the chassis a cross member 23 is connected at each end directly to the inner upright side faces 12 and the upper horizontal faces 14 of the tubular members 10, 11.

8.  A chassis for a fork lift truck, wherein the chassis includes sealed chambers, is characterised by a pair of spaced parallel rolled tubular members 10, 11 of rectangular cross-section, end members 20 at the ends of each tubular member to define sealed chambers within the tubular members, and cross members 23, 26 located towards opposite ends of the tubular members to interconnect the tubular members and define a rigid chassis structure.

9.  A chassis according to claim 8 characterised in that opposite ends of the tubular members 10, 11 each lie in a plane at an acute angle to the longitudinal axis of the members, the plates at opposite ends of each tubular member being at an equal but opposite inclination.

10. A chassis according to claim 8 or 9 characterised
in that the tubular members 10, 11 each include
a single longitudinal welded seam.

11. A chassis according to claim 8, 9 or 10
characterised in that the cross member 26 at
one end of the chassis is connected at its ends
in at least one plate 27, 28, 29, 30 secured in
face to face contact with the inner longitudinal
side faces of the tubular members 10, 11 and the
cross member 23 at the opposite end of the chassis
is connected at its ends directly to the inner side
faces 12 and upper faces 14 of the tubular members
10, 11.

FIG.1.

FIG.2.

FIG.3.

0187011

European Patent
Office

**EUROPEAN SEARCH REPORT**

Application number

EP 85 30 9148

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y,A | US-A-2 764 449 (DUNHAM) <br><br> * Column 2, lines 16-72; column 3, lines 1-4 * | 1,2,8, 10 | B 66 F 9/075 <br> B 62 D 21/16 |
| Y | US-A-2 494 115 (BOCK) <br><br> * Column 1, lines 44-55; column 2, lines 1-16 * | 1,2,8, 10 | |
| A | US-A-4 274 502 (SOMERTON-RAYNER) <br> * Column 1, lines 18-35, 56-68; column 2, lines 1-2 * | 1,5,8, 9 | |
| A | US-A-3 198 278 (KAUP) | | |
| A | GB-A- 977 289 (RANSOMES) | | TECHNICAL FIELDS SEARCHED (Int. Cl.4) <br><br> B 66 F <br> B 62 D |
| A | DE-A-2 119 130 (LINDE) | | |
| A | PATENTS ABSTRACTS OF JAPAN, vol. 6, no. 181 (M-156) [1059], 17th September 1982; & JP - A - 57 90 272 (NISSAN JIDOSHA K.K.) 04-06-1982 <br><br> --- -/- | | |

The present search report has been drawn up for all claims

| Place of search | Date of completion of the search | Examiner |
|---|---|---|
| THE HAGUE | 26-03-1986 | VAN DEN BERGHE E.J.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

**European Patent Office**

**EUROPEAN SEARCH REPORT**

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl.4) |
| A | GB-A-2 050 970 (NISSAN MOTOR CO.) --- | | |
| A | US-A-3 889 782 (GEIS) --- | | |
| A | GB-A- 10 866 (LAISNE)(A.D. 1914) ----- | | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 26-03-1986 | VAN DEN BERGHE E.J.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82